# EUROPEAN PATENT APPLICATION

(11) **EP 2 469 416 A1**
(43) Date of publication of application: **27.06.2012**
(21) Application number: 10196133.2
(22) Date of filing: 21.12.2010
(51) Int. Cl.: G06F 11/36

(54) **Test bed for an AUTOSAR software component and method for checking an AUTOSAR software component**

(71) Applicant: Robert Bosch GmbH, 70442 Stuttgart (DE)
(72) Inventor: Morgan, Gary, Thixendale, YO17 9TG (GB); Tracey, Nigel, York, YO30 5QQ (GB); Rutter, Mark, Heslington York, YO10 5DX (GB); Mitchel, Stuart, Elvington, York, YO41 4BE (GB); Dickie, James, Strensall, York, YO32 5WT (GB)

(57) **Abstract**

The invention relates to a test bed for an AUTOSAR software component comprising a test module (4, 6, and 11) for testing the AUTOSAR software component (1) and a runtime environment (5) to manage their communication. The test bed for an AUTOSAR software component (1) reduces development complexity and development time by and improves quality of test results. The test module is created as a test AUTOSAR software components (4, 6, 11) communicating with the software component under test (1) through the runtime environment (5)

## Description

### State of the art

The invention relates to a test bed for an AUTOSAR software component comprising a test module and a method for testing an AUTOSAR software component, wherein the software component can be in a desktop prototype or in a rapid prototype or in an electrical control unit test system under test is tested by a software module .

The development of AUTOSAR software components comprises three stages: a desktop prototype, a rapid prototype and a development in a production electronic control unit (ECU). These different development steps currently use different and incompatible test strategies. For example, on the desktop prototype a variety of experiments environments are available such as the ASCET Experiment Environment, whereas for testing the final electronic control unit, Simulink models and LABCAR are used. The Simulink models simulate the physical environment in which the electronic control unit expects to run. So they are a model of the system that the electronic control unit controls and, therefore, provide stimulation to the ECU and react to its responses in a realistic manner.

The use of multiple different types of test approach leads to poor reuse and repeated developments of software artefacts that perform similar tasks.

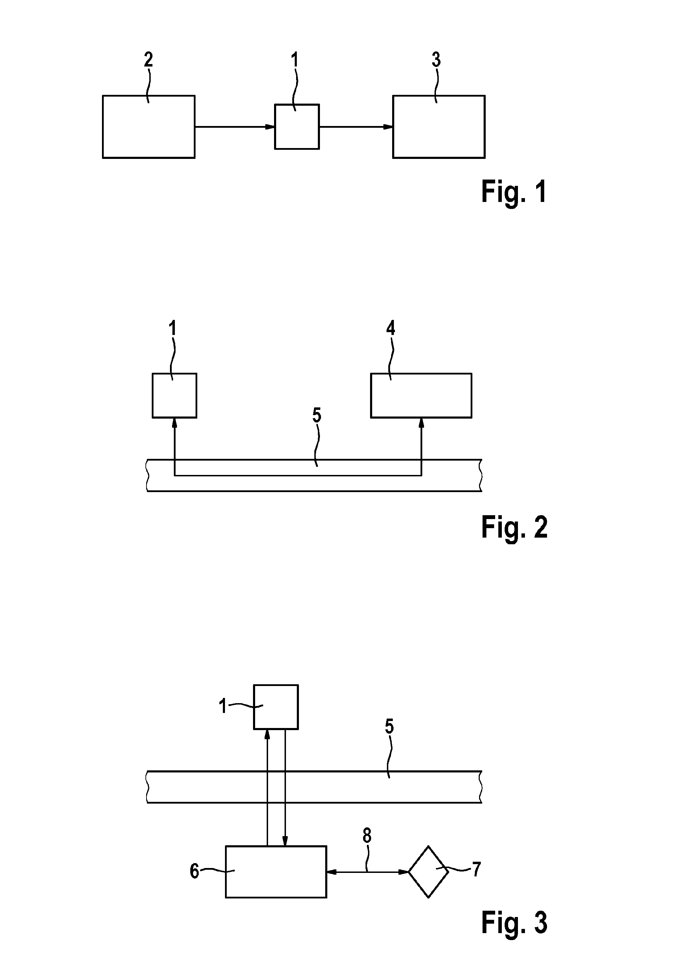

AUTOSAR has a concept of software components that embody a piece of application functionality. In order to test a software component it is necessary to provide input values to the software component and to verify the outputs of the software component 1. As shown in Fig. 1, in a first experiment or test input element 2 provides the checked software component 1 with input data and a second experiment output element 3 verifies the output data of the checked software component 1. There are typically multiple ways to implement input element 2 and output element 3. Manual stimulation and checking via an experimental system is possible. Further, simulation of real-network traffic or use of Simulink models to stimulate and verify the components being tested is also possible.

Often these techniques are not applicable between different stages in the development cycle.

### Disclosure of the invention

The problem addressed in this invention is the development of a test bed for an AUTOSAR software component reducing development complexity and development time and improving the quality of the test results.

The problem is solved by creating the test module as a test AUTOSAR software component communicating with the software component under test through an AUTOSAR runtime environment (RTE). The main advantage of such a solution is the reuse of the test artefacts used in testing of AUTOSAR software components. The AUTOSAR test module is handled like any other AUTOSAR software component and is connected to other software components by AUTOSAR's runtime environment. The invention allows the same test environments to be united across all three stages of development resulting in greater software reuse, lower costs and better tests.

In one embodiment the test software component stimulates and/or verifies the behaviour of the software component being tested. A key feature of the invention is that the software used to stimulate and verify the behaviour of software component is built as another software component. Therefore, it can be used with no change at each stage of the product's development cycle.

Furthermore, an I/O simulation component as test AUTOSAR software component is connected to the software component being tested via the runtime environment. The I/O simulation component provides input values to the software component being tested, which are representative of the normal environment of the software component under test. This environment conforms to that which the application functionality in the software component requires, such as vehicle engine or climate control. The I/O simulation component verifies whether or not the outputs of the software component under test are correct. Hence, only one test component is needed for checking input and output of the software component, although many components could be used to embody many different tests. The I/O simulation component performs the same tasks as an experiment environment as far as the checked software component is concerned.

In addition, the I/O simulation component might be implemented in a variety of different ways. The I/O simulation component could be implemented as a graphical user interface with dials and controls on a workstation screen. Alternatively, the I/O simulation component could be implemented as a Simulink or ASCET model wherein Simulink and ASCET are software tools for a model based development of embedded vehicle software. It is also possible to implement the I/O simulation component as C source code derived from test sets in written in some a computer language readable by humans. All these alternatives could be run on a desktop machine as part of early stages of development, in a so-called virtual environment.

In another aspect of the invention, the test component could be deployed on some rapid prototyping hardware comprising the test software component and the runtime environment wherein the test software component user test is replaceable with regard to the rapid prototyping hardware. In this case the test software component is part of a computer which is connected on the one hand to physical hardware such as sensors, effectors or busses and, on the other hand, the computer is connected to the software component under test via the runtime environment. The software component under test is verified as part of a running system. If necessary, the original software component can still be connected via a workstation connected to the same bus as the runtime environment.

Moreover, an electronic control unit test system comprising the test software component and at least one electrical interface compatible with the electronic control unit connected via the runtime environment. The electronic control unit test system is used for testing the final electronic control unit. The tests that it runs are the same as those used in the previous stages. Therefore, the costs of development of tests are reduced.

Any electrical interfaces belonging to an electronic control unit under test are connected to the electronic control unit test system. For checking the AUTOSAR software component testing will take place using the interfaces that the electronic control unit provides. The test set has already been developed as part of the early stages of software component development, is used again in testing the final production ECU.

Another aspect of the invention is related to a method for checking an AUTOSAR software component, wherein the AUTOSAR software component is tested by a software module in a desktop prototype, in a rapid prototype and in a final electronic control unit test system. The invention shows a method by which the same test software components to test the software component under test can be used by the desktop prototype, the rapid prototype and electronic control unit. Consequently, the same test environments are used across all three stages of development resulting in greater software reuse, lower costs and better tests.

Furthermore, the test software components can be used to stimulate and/or verify the behaviour of the software component under test on the desktop prototype, in the rapid prototype or in the final electronic control unit test system, because the test software component is built as an AUTOSAR software component as is the software component under test. Therefore, it can be used with little or no changes at each stage of the product development cycle.

The test software component is easily integrated into the desktop prototype software test bed, the rapid development system or the final electronic control unit test. Hence, the test set developed in a first stage of development is usable in each development stage wherein only one development result is used repeated.

In addition, the communication of the test AUTOSAR software component with the AUTOSAR software component under test is realized through a runtime environment (RTE) regardless of whether the test AUTOSAR software component is implemented in the desktop prototype, the rapid prototype or the final electronic control unit test system. Because the runtime environment (RTE) is part of AUTOSAR concept the development of new communication links between the test software component and the software component under test is not necessary because a communication link in form of the runtime environment already exists. In another aspect of the invention the test software component provides values representative of the environment required by the software component to be tested to the software component to be tested to it and verifies the outputs for correctness.

The invention allows different embodiments. Several shall be explained with help of the following figures.

It shows:
- Fig.1:: Testing of a non-AUTOSAR component
- Fig.2:: Software component in AUTOSAR-based test environment
- Fig.3:: Software component in a rapid prototyping test environment
- Fig. 4:: Software component in a final electronic control unit test system.

The same features are characterized by the same reference numbers.

Fig. 2 shows the software component 1, which shall be tested, in an AUTOSAR-based environment. An I/O simulation component 4 is designed in form of an AUTOSAR software component and has the task to test the AUTOSAR software component 1. The AUTOSAR software component 1 and the test software component in the form of the I/O interface component 4 have ports that carry events and adapt to and from each software component 1 and 4. A piece of software called the runtime environment 5 (RTE) connects the ports of software components 1 and 4 together so that the software component 1 and the I/O interface component 4 can communicate with each other. Therefore, a software component 1 only knows about its working environment from the interaction it has over these ports.

The test software of the I/O interface component 4 used to stimulate and verify the behaviour of the checked software component 1 is built as another AUTOSAR software component. In order to test the software component 1 the I/O interface component 4 provides the software component 1, which is tested, with input values via the runtime environment 5. The tested software component 1 sends back a response through the runtime environment 5 to the I/O interface component 4. The I/O interface component 4 evaluates the data sent by the software component 1 and determines whether the tested software component 1 works correctly.

The test software of the I/O interface component 4 appears to the other software components of the AUTOSAR system, especially to the tested software component 1, as another software component. Hence, the runtime environment 5 is used to connect the test system of the I/O interface 4 to the software component 1 at all stages of the development of the product.

The I/O software component 4 might be implemented in a variety of different ways. For example:
1. as a Graphical user interface with dials and controls on a workstation screen
2. as a Simulink or ASCET model
3. as C-source code derived from test sets.

All these alternatives could be run on a desktop machine as part of the early stages of development.

A test environment for the software component 1 in the second stage of software development is shown in Fig. 3. The AUTOSAR software component 1 communicates to a computer 6 via the runtime environment 5. The test software component in the form of the I/O-Interface 4 is part of the computer 6, which is connected to real hardware components 7 such as sensors, actuators and effectors via a bus system 8 such as CAN, LIN, Flexray etc. In this case the test software component is verified as part of a running system of the rapid prototyping test environment. Alternatively, the original software component in form of I/O interface component 4 can still be connected via a workstation connected to the same bus as the runtime environment (RTE).

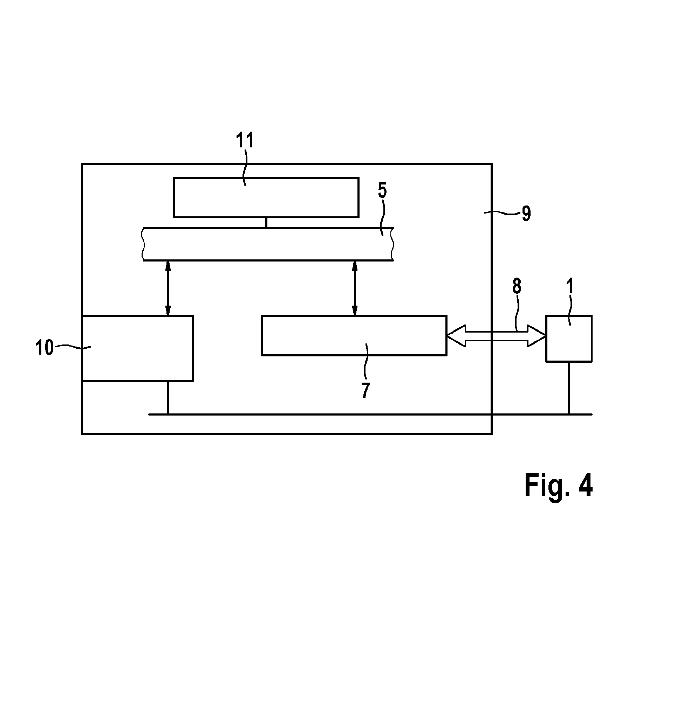

Fig. 4 shows an electronic control unit test system 9 used for testing the final electronic control unit which contains the software component 1.Test software components 11 derives from the I/O interface component 4 and the computer terminal 6 from previous stages of software development are part of the electronic control unit test system 9 connected to the runtime environment 5. The runtime environment 5 leads to an AUTOSAR communication stack 10 and electrical interfaces 7. The electrical interface 7 communicates via the bus 8 with the final electronic control unit containing the software component 1. Further, the software component 1 is connected to the test system via its own AUTOSAR communication stack that is part of the ECU that contains the software component 1.

To test the final electronic control unit the electrical interface 7 that the electronic control unit provides are used. Because the test set has been already been developed as part of the early stages of software component development like I/O interface component 4 and computer terminal 6, this can be used again in the final product test. The tests that run are the same as those used in the previous stages. So the test software components 4 or 6 provide input values for the electrical interfaces 7. The electrical interfaces 7 send the conditioned data to the software component 1 positioned in the electronic control unit 13. The software component 1 replies to the received information and send back results of computations to the electrical interfaces 7. The electrical interfaces 7 pass the data via the runtime environment 5 to the test software component 11.

The invention features software development using the AUTOSAR software component model. The software components 1, 4 and 6 and the runtime environment 5 are available in all environments like desktop, rapid prototyping and the production of the electronic control unit. The tests and the experiment environments are written as AUTOSAR software components. An advantage of the invention is that the same set of tests work across all phases of software development. The same experiment environment can be used in all development phases and a much greater reuse is made of test software with less refactoring.

## Claims

1. Test bed for an AUTOSAR software component comprising a test module for testing the AUTOSAR software component (1) **characterized by** the test module created as test AUTOSAR software component (4, 6, 11) communicating with the software component under test (1) via a runtime environment (5).

2. Test bed according to claim 1 **characterized by** test AUTOSAR software component (4, 6, 11) stimulates and/or verifies the behaviour of the checked software component (1).

3. Test bed according to claim 1 or 2 **characterized by** an I/O simulation component (4) as test AUTOSAR software component connected to the software component under test (1) via the runtime environment (5).

4. Test bed according to claim 3 **characterized by** implementing the I/O simulation component (4) as graphical user interface with dials and controls on a workstation screen.

5. Test bed according to claim 3 **characterized by** implementing the I/O simulation component (4) as Simulink or ASCET model.

6. Test bed according to claim 3 **characterized by** implementing the I/O simulation component (4) as C source derived from test sets.

7. Test bed according to claim 1 or 2 **characterized by** a rapid prototyping hardware (7, 8) comprising the test AUTOSAR software component (6) and the runtime environment (5) wherein the test AUTOSAR software component (6) is replaceable with regard to the rapid prototyping hardware (7, 8).

8. Test bed according to claim 1 or 2 **characterized by** an electronic control unit test system (9) comprising the test software component (4, 6 and 11) and to check at least one electrical interface (7) of an electronic control unit (1) compatible connected with the runtime environment (5).

9. Test bed according to claim 8 **characterized by** connecting any electrical interfaces (7) via communication lines (8) to the checked software component (1).

10. Method for checking an AUTOSAR software component, wherein the AUTOSAR software component (1) is in a desktop prototype, in a rapid prototype system or in a final electronic control unit test system and is tested by a software module **characterized by** using one only test module created as an AUTOSAR test software components (4, 6, 11) for checking AUTOSAR software component (1) in the desktop prototype, in the rapid prototype system or in the final electronic control unit test system.

11. Method according to claim 10 **characterized by** using only one the test software component (4, 6, 11) to stimulate and/or verify the behaviour of the software component under test (1) on the desktop prototype, in the rapid prototype system or in the final electronic control unit test system.

12. Method according to claim 11 **characterized by** containing the test AUTOSAR software component (4, 6, 11) in a software test bed in the desktop prototype, in the rapid development system or the final electronic control unit test system.

13. Method according to claim 12 **characterized by** communicating of the test AUTOSAR software component (4, 6, 11) with the software component under test (1) via a runtime environment (5) wherein the AUTOSAR software component (4, 6, 11) is implemented in a test bed in the desktop prototype, the rapid prototype system or the final electronic control unit test system.

14. Method according to claim 12 or 13 **characterized by** providing values representative of the environment of the checked software component (1) by the test AUTOSAR software component (4, 6, 11) to software component under test (1) and verify the outputs from the checked software component (1) for correctness.
